# EUROPEAN PATENT APPLICATION

(11) **EP 3 381 635 A1**
(43) Date of publication of application: **03.10.2018**
(21) Application number: 18163910.5
(22) Date of filing: 26.03.2018
(51) Int. Cl.: B28C 5/42, B01F 13/00, B01F 15/02, B60P 3/16, B28C 7/06

(54) **HOPPER ASSEMBLY**

(30) Priority: 30.03.2017 GB 201705065
(71) Applicant: Hymix Ltd, Telford, Shropshire TF3 3AY (GB)
(72) Inventor: Humpish, Nicolas James, Telford Shropshire TF3 3AY (GB)
(74) Representative: Wynne-Jones IP Limited

(57) **Abstract**

This invention relates to a hopper assembly for a transit mixing vehicle, the hopper assembly comprising a charge hopper (18) shaped and configured to, in an operable orientation, receive therein and discharge therefrom material, a mounting assembly (24) coupled at one end to the charge hopper (18) and mountable for use at an opposing end to said vehicle for movement, in use, between a first configuration in which said charge hopper (18) is adjacent a drum opening (16) at an upper region of said vehicle and in said operable orientation, and a second configuration in which said charge hopper (18) is in a vertically lower position relative to said drum opening (16) and accessible at ground level.

## Description

This invention relates generally to a hopper assembly, particularly but not necessarily exclusively suitable for a vehicle such as a concrete mixer truck or the like, and also to such a vehicle including a hopper assembly.

A typical transit mixing vehicle, such as concrete mixer truck, comprises a drum mounted for rotation about an inclined axis and an opening at the raised end which serves to receive ingredients to be mixed and to discharge the mixed material during a pour operation. The drum is typically provided with internal mixing blades that move the ingredients toward the lower end of the drum for mixing as the drum is rotated in a first direction, and which move the mixed material upward for discharge when the drum is rotated in the opposite direction. A charge hopper is mounted, externally and adjacent, in relation to the drum opening, and is used to feed ingredients into the drum for mixing. A chute may also be provided for facilitating discharge of mixed material (e.g. concrete) from the drum for use.

There is a frequent need for an operative to access the uppermost regions of the truck in order to observe, repair, maintain and service components such as the chute, charge hopper and mixing blades mentioned above. Indeed, there is a repeated need for such access for the purposes of (at least):
- Washing off the charge hopper and back blades of the mixer after loading;
- Washing off the drum mouth and discharge hopper after concrete delivery; and
- Estimating the slump of the concrete in the drum.
In order to facilitate access to the uppermost regions of the drum, a ladder is provided on all conventional transit mixing vehicles, which ladder is typically fixed to the support assembly carrying the upper portion of the drum, the support assembly itself being mounted on the truck chassis.

However, there are a number of issues associated with such ladder assemblies. Firstly, they tend to be provided in (at least) two parts, namely an upper part and a lower part, wherein the lower part is configured for movement relative to the upper part between a raised (stowed) configuration, for transit, and a lowered (operable) configuration, for use. The raising and lowering operations inevitably introduce a risk of the operative (or someone else) trapping their fingers in the mechanism between the two ladder parts and injuring themselves. Also, any impact or debris to which the mounting mechanism is subjected can result in it being damaged, or otherwise compromised, thus preventing effective deployment or stowing of the ladder.

Furthermore, there is always a significant health and safety risk associated with the need to work at heights, and also the existence of the ladder offers a temptation to operatives seeking (unauthorised) entry to, and egress from, the drum for the purposes of inspection, maintenance and cleaning, which is considered to be exceptionally dangerous and thus actively discouraged.

Still further, the need to provide a ladder assembly for the purposes described above (and others) adds significant weight to the overall vehicle, which is clearly undesirable, particularly from the point of view of efficiency and economy.

Thus, and more generally, there is an ongoing desire and endeavour in the field of transit mixing vehicle and the like, to a) mitigate potentially hazardous operations and improve health and safety conditions for both operatives and others, and b) improve the overall efficiency and economy of transit mixing vehicles; and aspects of the present invention seek to address at least some of the issues described above.

In accordance with a first aspect of the present invention, there is provided a hopper assembly for a transit mixing vehicle, the hopper assembly comprising a charge hopper shaped and configured to, in an operable orientation, receive therein and discharge therefrom material, a mounting assembly coupled at one end to the charge hopper and mountable for use at an opposing end to said vehicle for movement, in use, between a first configuration in which said charge hopper is adjacent a drum opening at an upper region of said vehicle and in said operable orientation, and a second configuration in which said charge hopper is in a vertically lower position relative to said drum opening and accessible at ground level.
It will be appreciated that the term "accessible at ground level" is intended to refer to height above ground level that enables an average operative to access the hopper to clean it without needing any form of ladder or step to reach it. It is thought that this "height" between the lowermost point of the hopper in the second configuration and the ground would be between 1.5 (or a little less) and 2m (or a little more).

In an exemplary embodiment, said mounting assembly may be configured, during movement thereof from said first configuration to said second configuration, to rotate said charge hopper from said first orientation to a second orientation. Optionally, in said second orientation, the longitudinal axis of said charge hopper may be substantially vertical, when the hopper assembly is mounted to a vehicle and the vehicle is oriented for use.

The mounting assembly may comprise a link arm, coupled at one end to said charge hopper and configured to be pivotally mounted to said vehicle at an opposing end, and further comprising drive means configured to be coupled to said link arm for moving, in use, said link arm between said first and second configurations.

The path of movement of said mounting assembly between said first and second configurations may, advantageously, be substantially arcuate (outwardly and rearwardly relative to the vehicle on which it is mounted), such that there is sufficient clearance between the rear components of the vehicle and the hopper assembly during movement thereof between the first and second configurations.

In accordance with a second exemplary embodiment of the present invention, there is provided a transit mixing vehicle comprising a drum mounted on a support assembly for rotation about an inclined axis and having an opening at an upper end thereof, and further comprising a hopper assembly substantially as described above, wherein said mounting assembly is coupled at its said opposing end to said support assembly and, wherein, in said first configuration, said charge hopper is located adjacent to said drum opening and in said first orientation.

In an exemplary embodiment of the invention, the mounting assembly may comprise a link arm, said charge hopper being coupled to an upper end of said link arm and an opposing lower end of said link arm being pivotally mounted to said support assembly for pivotal movement between said first and second configurations. The charge hopper may be fixedly mounted on a substantially horizontal support arm and an upper end of a respective link arm is coupled at each end of said support arm, wherein an opposing lower end of each link arm is pivotally mounted at a pivot point to a respective side of said support assembly.

Drive means may be coupled to at least one of said link arms and configured to selectively move said link arms between said first and second configurations. Such drive means may be connected to at least one of said link arms, at said pivot point, via a lever arm, and wherein said drive means is configured to cause linear movement of said lever arm and linear movement of said lever arm causes rotational movement of said link arm. The lever arm may be generally arcuate.

These, and other, aspects of the present invention will be apparent from the following specific description, in which embodiments of the present invention are described, by way of examples only, and with reference to the accompanying drawings, in which:
Figure 1 is a schematic rear view of a transit mixing vehicle according to an exemplary embodiment of the present invention, with the hopper assembly in the closed or operable configuration;
Figure 2 is a schematic partial perspective view of the vehicle of Figure 1;
Figure 3 is a schematic partial side view of the vehicle of Figure 1;
Figure 4 is a schematic rear view of a transit mixing vehicle according to an exemplary embodiment of the present invention, with the hopper assembly in the open or lowered configuration;
Figure 5 is a schematic partial perspective view of the vehicle of Figure 4;
Figure 6 is a schematic partial side view of the vehicle of Figure 4; and
Figure 7 is a schematic perspective view of a transit mixer assembly according to an exemplary embodiment of the present invention, with the hopper in the open, lowered configuration.

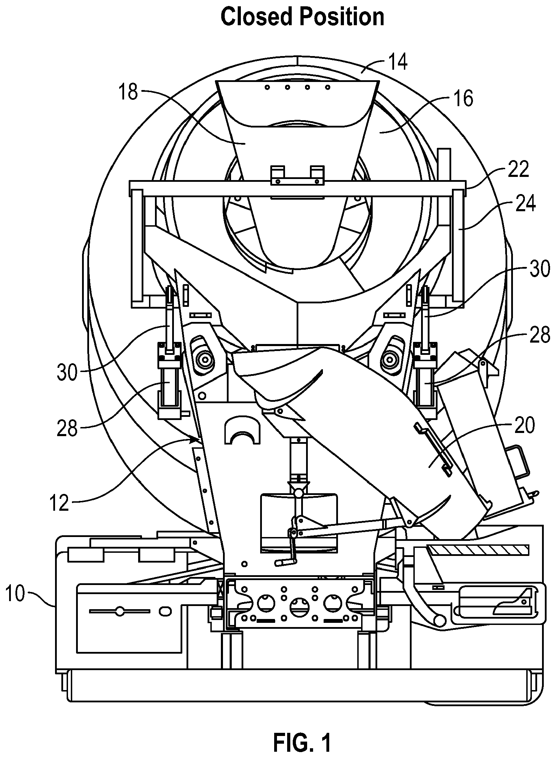

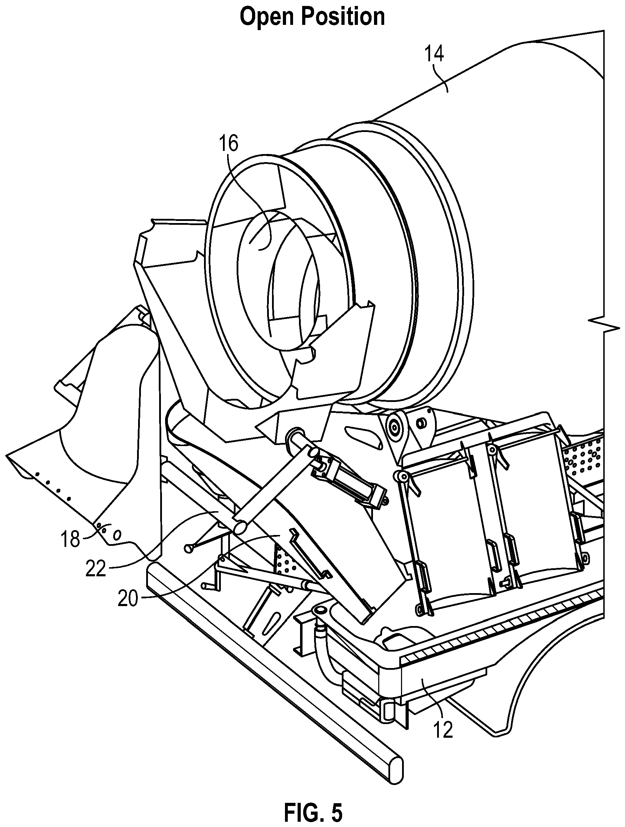

Referring to Figure 1 of the drawings, a transit mixing vehicle arrangement is illustrated, that comprises a chassis 10 on which is mounted a support assembly (indicated generally at 12). A drum 14 is mounted for rotation about an inclined axis, with the upper portion thereof carried on the support assembly 12, and an opening 16 (referred to hereinafter as the drum mouth) on the raised end which serves to receive ingredients to be mixed and to discharge the mixed material during a pour operation. As explained above, the drum 14 is typically provided with internal mixing blades (which cannot be seen in the views of Figures 1 to 6), that move the ingredients toward the lower end of the drum 14 for mixing as the drum is rotated in a first direction, and which move the mixed material upward for discharge when the drum is rotated in the opposite direction. A charge hopper 18 is mounted in relation to the drum opening 16, and is used to feed ingredients into the drum for mixing. A chute 20 is also provided for facilitating discharge of mixed material (e.g. concrete) from the drum 14 for use, the chute 20 being mounted on the support assembly 12 and fixed at a location below the drum mouth 16.

In a conventional transit mixing vehicle, a ladder assembly would be provided, typically vertically along the side of, and mounted to, the support assembly 12, with a work platform provided at the upper end thereof and located adjacent to the drum opening 16. There are a number of reasons why the ladder/work platform assembly is conventionally deemed to be an essential element of a transit mixing vehicle, as the operative is required to repeatedly and routinely perform a number of tasks that include washing off the charge hopper and back blades of the mixer after loading, washing off the drum mouth and discharge hopper after concrete delivery, and estimating the slump of the concrete in the drum.

The washing tasks described above are typically performed by an operative, standing on the above-described work platform at the top of the ladder and directing water from a hose, as required, onto the areas to be washed. It will be apparent that, in conventional transit mixing vehicles, the hopper 18 is typically fixed in an operable configuration adjacent the drum mouth 16, i.e. in the general position illustrated in Figure 1 and at a significant height above ground level with the inner surfaces thereof facing inward toward the drum mouth 16, such that the drum mouth and back blades are (at least partially) blocked thereby. Indeed, the back blades and drum mouth are known to be the most difficult to keep clean, at least partially for these reasons, and yet they also have the biggest influence on discharge performance. It is, therefore, highly desirable to ensure that the back blades of the mixer are adequately washed after loading, to optimise discharge speed and, therefore, save time and fuel. Thus, it is conventionally thought that the only way to adequately achieve this is to perform the washing operations at a height close to that of the drum mouth, so as to ensure that water reaches the critical locations behind the fixed hopper. However, not only does the need for a ladder/work platform assembly significantly increase the overall weight of the vehicle, but also the need for the operative performing these washing tasks to work at height introduces a significant health and safety risk.

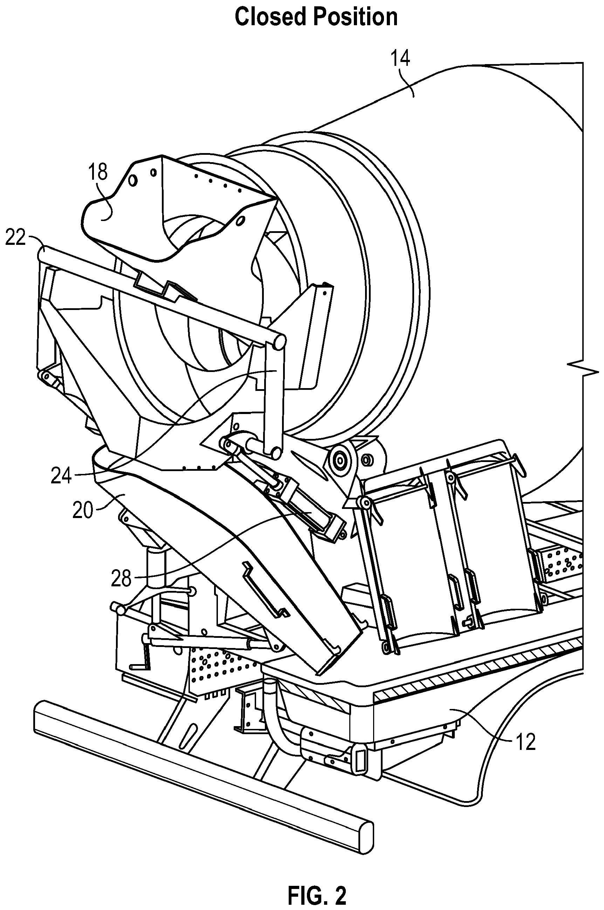

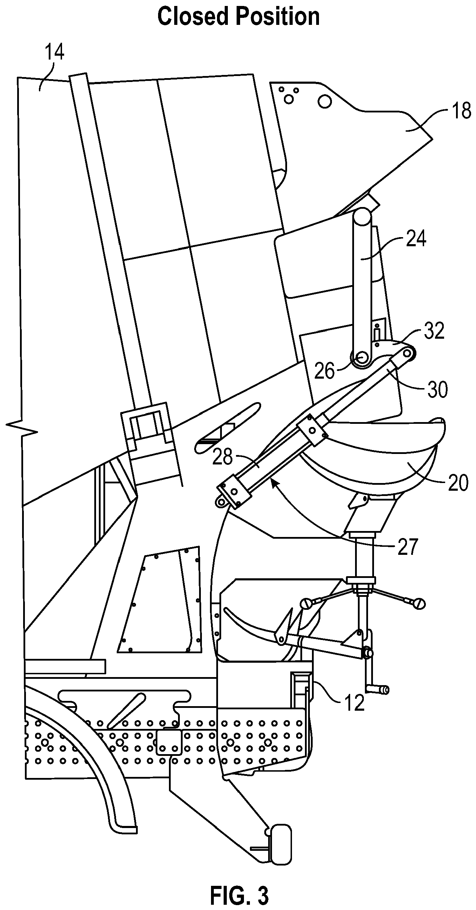

Thus, the present invention seeks to address these issues and, referring back to Figure 1 and, additionally Figures 2 and 3, of the drawings, the charge hopper 18 is clamped, at its lower surface (when oriented for use) to a substantially horizontal bar 22. A respective link arm 24 is fixedly coupled at one end to each end of the horizontal bar 22. The opposite end of each link arm 24 is pivotally coupled, at a pivot point 26, to the support assembly 12. A respective ram 26, or other linear drive means, is provided on each side of the support assembly 12, each ram 27 comprising a piston cylinder 28 and a piston rod assembly 30. The piston cylinder 28 of each ram 27 is mounted on a respective side of the support assembly 12, with the distal end of each piston rod 30 coupled to a respective link arm 24.

In the 'closed', operable configuration illustrated in Figures 1 to 3 of the drawings, the charge hopper 18 is located, for use, within the drum mouth 16, adjacent the uppermost region of the vehicle, and the piston rod 30 of each ram 26 is fully extended. When it is required to, for example, perform a washing operation, such as washing off the charge hopper 18 and back blades of the mixer after loading or washing off the drum mouth 16 and hopper 18 after concrete delivery, the rams 27 (which may, for example, be pneumatic or hydraulic) are operated to retract the respective piston rods 30. Each piston rod 30 is coupled to a respective link arm 24. Thus, when the piston rods 30 are retracted, they cause the link arms 24 to pivot about their respective pivot points 26, causing them to rotate 'downwardly' and thus lowering the horizontal bar 22 and hopper 18 mounted thereon to a height where an operative can conveniently wash the hopper 18 from ground level, e.g. around 1.5 - 2m above ground level. In the specific example illustrated, this height (i.e. from the bottom of the hopper 18 to ground level) is around 1.72m, but the present invention is not necessarily intended to be limited in this regard.

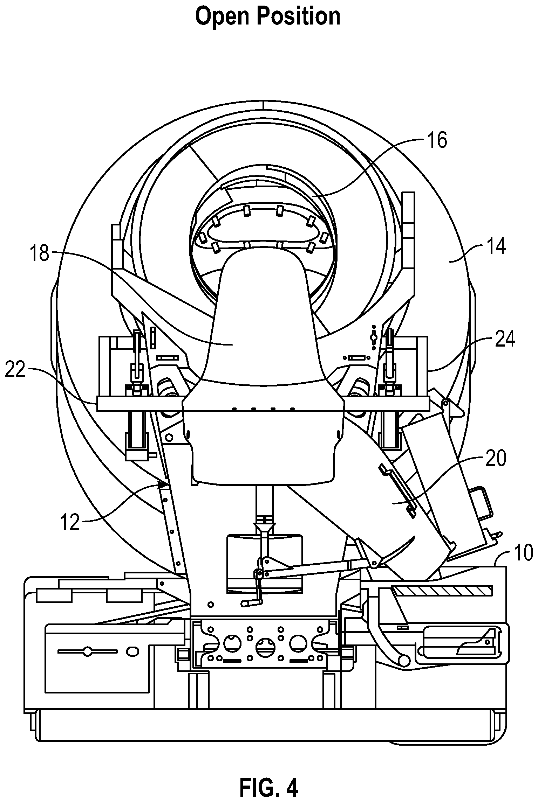

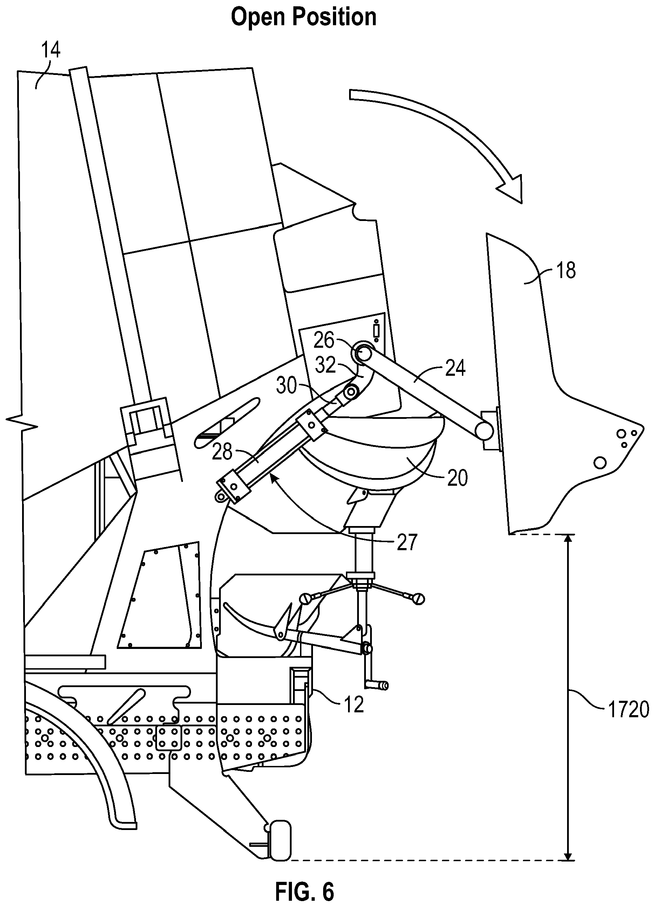

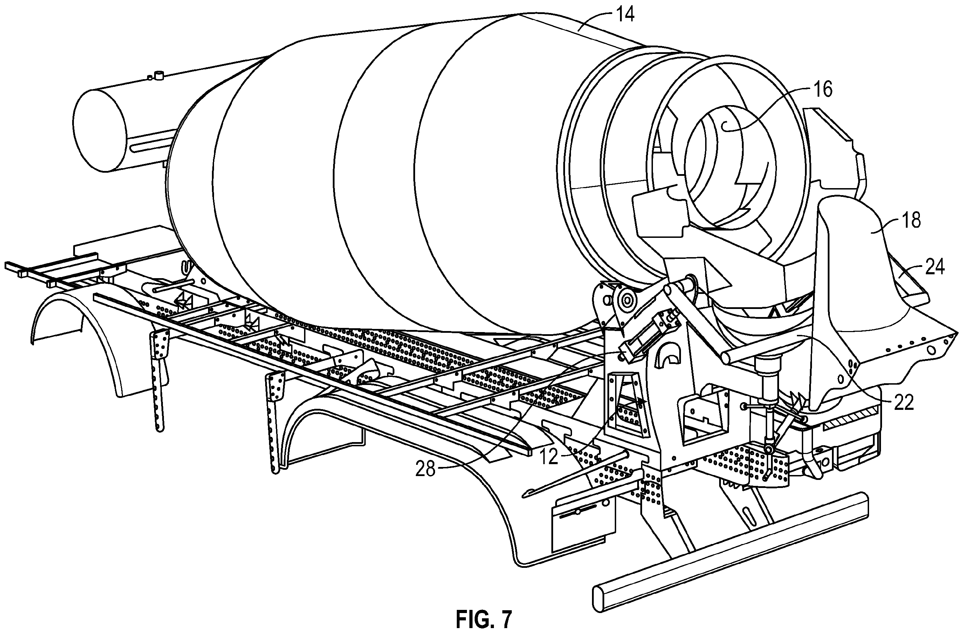

As best seen in Figures 3 and 6 of the drawings, the distal end of each piston rod 30 is coupled, at the respective pivot point 26, to a respective link arm 24 by means of a curved lever arm 32, fixedly connected between the distal end of the piston rod 30 and the link arm 24 at the pivot point 26. Thus, when the piston rod 30 is retracted, the respective lever arm 32 operates as a lever to the respective link arm 24 such that, as it is pulled linearly rearward, it causes the link arm 24 to rotate 'downwardly' to lower the hopper 18. The shape and configuration of the lever arm 32 thus ensures that the outward/rearward curvature of the downward movement of the hopper 18 relative to the rear components of the vehicle is such that there is sufficient clearance therebetween, whereas the pivotal operation of the link arm 24 additionally causes the orientation of the hopper 18 to be rotated through over 90°. thus, in the 'open', lowered configuration illustrated in Figures 4 to 7 of the drawings, the inner surfaces of the hopper 18 are outwardly/rearwardly facing so that they are fully accessible (from ground level) for quick and effective washing thereof. In this configuration, the drum mouth 16 is fully open and unobstructed, and can be effectively and adequately washed, from ground level, by directing water from a hose pipe, upwardly, into and around it.

Typically, the slump of concrete in the drum 14 is estimated by an operative viewing the inside of the drum from a conventional work platform located at roughly the same height as, and adjacent to, the drum mouth 16. However, it is envisaged that such a view could equally be obtained from one or more cameras mounted at a suitable location, externally of and adjacent the drum mouth 16. The operation of the present invention is such that, when the hopper assembly is in the 'open', lowered configuration, an unobstructed view into the drum from the drum mouth is afforded and can be utilised in this manner.

Thus, it can be seen that aspects of the present invention can be used to eliminate altogether the need for a ladder/work platform assembly on a transit mixing vehicle, or at least significantly reduce the need for its routine and repeated us, thus mitigating the health and safety risks associated with working at height and, potentially, reducing the overall weight of the vehicle, with clear advantage in terms of efficiency and economy. Furthermore, washing processes performed in respect of a transit mixing vehicle having a hopper assembly according to an exemplary embodiment of the present invention, are more effective and thorough, as well as quicker, due to the ease of access to the regions required to be washed.

It will be apparent to a person skilled in the art, from the foregoing description, that modifications and variations can be made to the described embodiments without departing from the scope of the invention as defined by the appended claims. For example, the means for causing movement of the hopper assembly from the closed or operable configuration to the open or lowered configuration (or vice versa) is not necessarily limited to a ram assembly. Other suitable linear drive means will be apparent to a person skilled in the art. Indeed, such drive means need not necessarily be powered: for example, a manual (or electronic) locking mechanism may be provided to lock the assembly in the closed configuration and which, when released, allows the hopper assembly to 'fall' under gravity to the open configuration. Damping means may be provided to control the rate at which the assembly moves from the closed to the open configuration. A mechanical lever may be provided to enable the hopper assembly to be returned to the closed configuration, as required.

Furthermore, the present invention is not necessarily limited in relation to the specific configuration of the link and lever arms, and other suitable configurations will be readily apparent to a person skilled in the art, that will facilitate movement of the hopper assembly along a path that provides suitable clearance between it and the components at the rear of the vehicle between the closed and open configurations. Whilst it is considered to be advantageous, the present invention is not necessarily intended to be limited in relation to the additional feature whereby the orientation of the hopper itself is rotated from the operable position to a position in which its inner surfaces are outward/rearward facing. In some exemplary embodiments, at least, it may be adequate to simply lower the hopper to a location that is accessible from ground level and wherein there is sufficient clearance between the inner surfaces thereof and the rear components of the vehicle to enable an operative to direct water where it is required.

## Claims

1. A hopper assembly for a transit mixing vehicle, the hopper assembly comprising a charge hopper shaped and configured to, in an operable orientation, receive therein and discharge therefrom material, a mounting assembly coupled at one end to the charge hopper and mountable for use at an opposing end to said vehicle for movement, in use, between a first configuration in which said charge hopper is adjacent a drum opening at an upper region of said vehicle and in said operable orientation, and a second configuration in which said charge hopper is in a vertically lower position relative to said drum opening and accessible at ground level.

2. A hopper assembly according to claim 1, wherein said mounting assembly is configured, during movement thereof from said first configuration to said second configuration, to rotate said charge hopper from said first orientation to a second orientation.

3. A hopper assembly according to claim 2, wherein, in said second orientation, the longitudinal axis of said charge hopper is substantially vertical.

4. A hopper assembly according to any of the preceding claims, wherein said mounting assembly comprises a link arm, coupled at one end to said charge hopper and configured to be pivotally mounted to said vehicle at an opposing end, and further comprising drive means configured to be coupled to said link arm for moving, in use, said link arm between said first and second configurations.

5. A hopper assembly according to any of the preceding claims, wherein the path of movement of said mounting assembly between said first and second configurations is substantially arcuate.

6. A transit mixing vehicle comprising a drum mounted on a support assembly for rotation about an inclined axis and having an opening at an upper end thereof, and further comprising a hopper assembly according to any of the preceding claims, wherein said mounting assembly is coupled at its said opposing end to said support assembly and, wherein, in said first configuration, said charge hopper is located adjacent to said drum opening and in said first orientation.

7. A transit mixing vehicle according to claim 6, wherein said mounting assembly comprises a link arm, said charge hopper being coupled to an upper end of said link arm and an opposing lower end of said link arm being pivotally mounted to said support assembly for pivotal movement between said first and second configurations.

8. A transit mixing vehicle according to claim 7, wherein said charge hopper is fixedly mounted on a substantially horizontal support arm and an upper end of a respective link arm is coupled at each end of said support arm, wherein an opposing lower end of each link arm is pivotally mounted at a pivot point to a respective side of said support assembly.

9. A transit mixing vehicle according to claim 8, wherein drive means are coupled to at least one of said link arms and configured to selectively move said link arms between said first and second configurations.

10. A transit mixing vehicle according to claim 9, wherein said drive means is connected to at least one of said link arms, at said pivot point, via a lever arm, and wherein said drive means is configured to cause linear movement of said lever arm and linear movement of said lever arm causes rotational movement of said link arm.

11. A transit mixing vehicle according to claim 10, wherein said lever arm is generally arcuate.

12. A transit mixer vehicle according to any of the preceding claims, wherein the distance between a lowermost point of the hopper in the second configuration and the ground on which the vehicle is supported is between 1.5 and 2m.
